# EUROPEAN PATENT APPLICATION

(11) **EP 2 219 360 A1**
(43) Date of publication of application: **18.08.2010**
(21) Application number: 10153098.8
(22) Date of filing: 09.02.2010
(51) Int. Cl.: H04N 1/00

(54) **Portable electronic device**

(30) Priority: 12.02.2009 KR 20090011577
(71) Applicant: LG ELECTRONICS INC., Yeongdeungpo-gu Seoul 150-721 (KR)
(72) Inventor: Ahn, Seung-Kwon, Seoul (KR)
(74) Representative: Cabinet Plasseraud

(57) **Abstract**

The present invention relates to a portable electronic device including a communication unit (100) and a camera unit (200), the portable electronic device being configured to activate the camera unit when the communication unit is in a first mode and to deactivate the camera unit when the communication unit is in a second mode.

## Description

### FIELD OF THE INVENTION

The present invention relates to a portable electronic device for allowing an access to an image capture function even in a state that wireless communication function related environments are not all implemented.

### DESCRIPTION OF THE PRIOR ART

Portable electronic device is a device which has a weight and size that can be carried by a user and various functions thereof are electronically controlled. For example, portable terminal, portable camera, MP3P, PMP, electronic dictionary, digital broadcast terminal, personal digital assistants (PDA), navigation, and the like may be examples of the portable electronic device.

As it becomes multifunctional, the portable electronic device can be allowed to capture still images or moving images, play music or video files, play games, receive broadcast and the like, so as to be implemented as an integrated multimedia player.

In case of implementing the foregoing various functions together with a wireless communication function, it may be considered to improve structural and/or software aspects thereof in order to enhance the user's convenience when executing those functions.

### SUMMARY OF THE INVENTION

The present invention is provided to access a capture function in a different way from the related art. Furthermore, the present invention is provided to activate an image capture unit even in a state that all the functions of a wireless communication unit are not implemented. In addition, the present invention is provided such that the right to control a commonly-connected user interface is changed based on the operation mode of the portable electronic device while the image capture unit and the wireless communication unit are being operated independently.

To achieve these objects and other advantages, and in accordance with the purpose of the invention, as embodied and broadly described herein, a portable electronic device according to an embodiment of the present invention comprises the features of claim 1. Further embodiments of the mobile terminal and method according to the present invention are described in the dependent claims.

A portable electronic device according to another embodiment of the present invention may include an image capture block, an communication block, an intermediate unit, and an user interface. The image capture block includes a first controller controlling a camera module and a first power supply unit providing power to the first controller. The communication block includes a second controller controlling a wireless communication module and a second power supply unit providing power to the second controller. The communication block is operated in a first mode in which information reception is only allowed or a second mode in which a screen for information transmission through the wireless communication module is displayed. The intermediate unit is electrically connected to the first and the second controllers to enable communication between the first and the second controllers. The user interface is electrically connected to the intermediate unit to be controlled by the first or the second controller. The display unit for displaying the screen is included in the user interface. The second controller is configured to operate the first power supply unit, thereby allowing the first controller to activate the camera module in a state that the first mode is activated by power supplied from the second power supply unit and the second mode is deactivated.

The second controller is configured to operate the first power supply unit by an input through the user interface. When the first and the second controllers are operated at different power levels, the intermediate unit includes a level converter for corresponding the different power levels for the communication between the controllers. It may further include a memory socket connected to the intermediate unit. The intermediate unit includes a connection module allowing the user interface and memory socket to be connected with either one of the first and the second controllers. The intermediate unit may further include a mode control unit allowing the connection module to operate for the connection based on a mode signal received from the first or the second controller. The first controller turns off the first power supply unit when receiving an input for activating the second mode through the intermediate unit.

A portable electronic device according to another embodiment of the present invention may include (a) allowing a communication block to be operated in a first mode between the first mode capable of receiving an event and a second mode capable of at least either one of replying or reading to the received event, (b) allowing a controller of the communication block to activate an image capture block, and allowing a controller of the image capture block to display a screen for image information acquired by operating a camera module on a display unit, (c) allowing the communication block being operated in the first mode to transfer the information for the received event to the image capture block while activating the image capture block, and (d) allowing the image capture block to selectively operate the communication block in the second mode.

The event includes a call signal or text message reception, and a call connection in response to the call signal or reading for the text message may be performed in the second mode. It may further include an alarm step of allowing the image capture block to notify the event reception between the steps (c) and (d). The alarm may be visually performed through the display unit. The image capture block may be configured to receive a command for activating or deactivating the second mode subsequent to the alarm. It may be configured such that the image capture block is deactivated when activating the second mode in the step (d), and the image capture block maintains an activated state and the communication block finishes the event reception state when the second mode is not activated. The communication block may be configured to perform an event transmission under the second mode. It may be configured such that a controller of the communication block received an input for activating the image capture block from a user input unit activates the image capture block and finishes the second mode while the communication block is operated in the second mode by the step (d).

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIG. 1 is a block diagram illustrating a portable electronic device according to an embodiment of the present invention;
FIG. 2 is a block diagram illustrating the configuration of an intermediate unit in FIG. 1;
FIG. 3A is a block diagram for explaining the operation of a portable electronic device having a communication unit and a camera unit in FIG. 1;
FIG. 3B is a conceptual view illustrating an output screen of a display unit for explaining a selection step of FIG. 3A;
FIG. 4A is an operation flowchart for explaining a mode switching from the camera unit to the communication unit in FIG. 3A;
FIG. 4B is a conceptual view illustrating an example of an alarm step of FIG. 4A;
FIG. 4C is a conceptual view illustrating a state subsequent to finishing a second mode of the communication unit in FIG. 4A;
FIG. 5 is an operation flowchart for explaining a mode switching from a communication unit to a camera unit in FIG. 3A;
FIGS. 6A through 6D are perspective views for explaining a portable electronic device according to an embodiment of the present invention;
FIGS. 7A and 7B are conceptual views illustrating for explaining the operation of a display unit according to an embodiment of the present invention;
FIG. 8 is a conceptual view for explaining an operating state of a portable electronic device associated with a camera unit;
FIGS. 9A and 9B are conceptual views for explaining a method of displaying information associated with a first mode and a camera unit on a display unit;
FIGS. 10A and 10B are conceptual views illustrating an operating state of a portable electronic device associated with the activation of a camera unit; and
FIGS. 11A and 11B are conceptual views for explaining the transmission of an image captured by a camera unit.

### DETAILED DESCRIPTION OF THE INVENTION

Hereinafter, a portable electronic device associated with the present invention will be described in more detail with reference to the accompanying drawings. A suffix "module" or "unit" used for constituent elements disclosed in the following description is merely intended for easy description of the specification, and the suffix itself does not give any specific meaning or function.

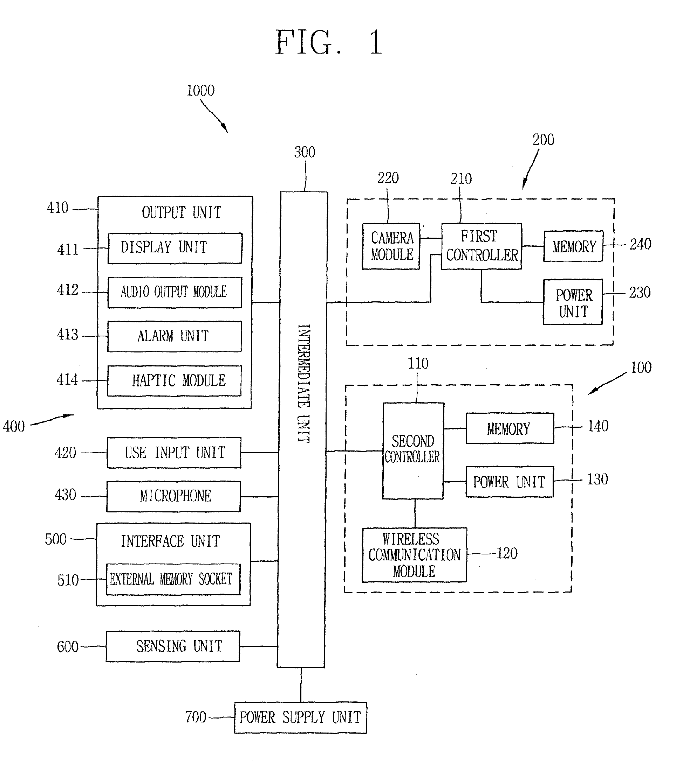

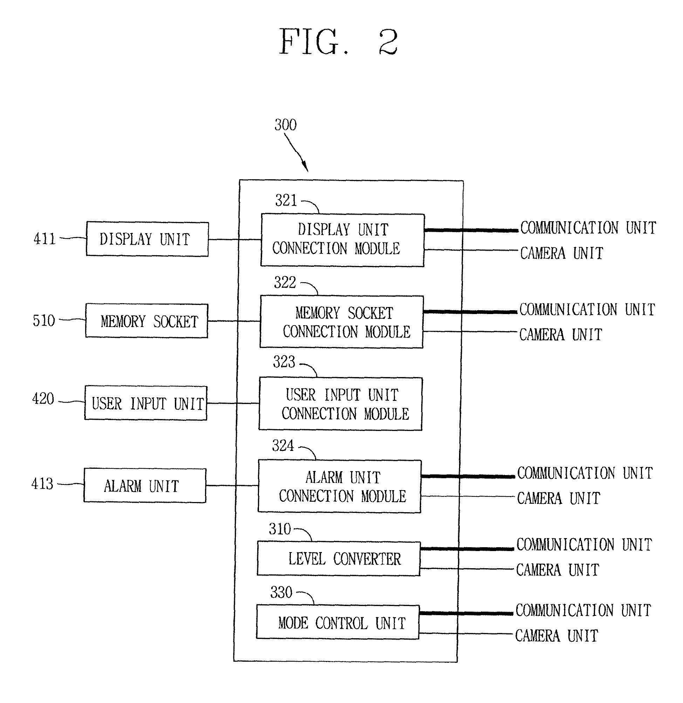

FIG. 1 is a block diagram illustrating a portable electronic device 1000 according to an embodiment of the present invention, and FIG. 2 is a block diagram illustrating the configuration of an intermediate unit 300 in FIG. 1.

Referring to FIG. 1, the portable electronic device 1000 may include a communication unit 100, a camera unit 200, an intermediate unit 300, a user interface 400, an interface unit 500, a sensing unit 600, a power supply unit 700, and the like. However, the constituent elements as illustrated in FIG. 1 are not necessarily required, and the portable electronic device may be implemented with greater or less number of elements than those illustrated elements. The communication unit 100 and the camera unit 200 are referred to as a communication block and an image capture block respectively from a functional viewpoint.

First, the communication unit 100 may include a controller 110, a wireless communication module 120, a power unit 130, and a memory 140. The controller 110 controls the operation of a wireless communication module 120, and the like. The wireless communication module 120 enables communication between a portable electronic device 1000 and a wireless communication system or between a portable electronic device 1000 and a network in which the portable electronic device 1000 is located. The wireless communication module 120 may include a broadcast receiving module, a mobile communication module, a wireless Internet module, a short-range communication module, or a location information confirmation module, and the like. The power unit 130 determines whether or not power supplied from the power supply unit 700 through the intermediate unit 300 is provided to the wireless communication module 120, or the like. Otherwise, the power unit 130 may be immediately operated at the time of a manipulation to turn on the portable electronic device 1000, without having the power supply unit 700. The information received through the wireless communication module 120 or information related to the operation of the controller 110 may be stored in the memory 140.

Next, a camera unit 200 may include a controller 210, a camera module 220, a power unit 230, and a memory 240. The controller 210 controls the activation of the camera module 220, or the like. The controller 210 is independently operated from the controller 110 of the communication unit 100. The camera module 220 processes image frames such as still images or moving images obtained by an image sensor in a video call mode or image capture mode. Image frames that have been processed in the camera module 220 may be stored in the memory 240 or transmitted to the outside by the operation of the wireless communication module 120 intervened by the intermediate unit 300. The power unit 230 activates or deactivates the camera module 220 or the like, by power supplied from the power supply unit 700 through the intermediate unit 300. The memory 240 (and memory 140) may be at least any one storage medium of a flash memory type, a memory card type (for example, SD or DX memory), random access memory (RAM), electrically erasable programmable read-only memory (EEPROM), and the like. Otherwise, the function of the memory 140, 240 may be replaced by a web storage performing a data storage function on the Internet.

The intermediate unit 300 connects the communication unit 100 to the camera unit 200 with a circuit, thereby allowing communication between them. For example, when information is received to the wireless communication module 120 by means of the controller 110 of the communication unit 100 while the camera module 220 is operated by means of the controller 210 of the camera unit 200, the related data will be transferred to the controller 210 through the intermediate unit 300.

Referring to FIG. 2, the intermediate unit 300 may be provided with a level converter 310 for the foregoing communication. In case there is a difference between operating power levels of the communication unit 100 and the camera unit 200, the level converter 310 is a circuit for removing the difference. The intermediate unit 300 includes connection modules 321 to 324 for switching to connect a display unit 411, a memory socket 510, a user input unit 420, an alarm unit 413, and the like, to either one of the communication unit 100 and the camera unit 200. Those connection modules 321 to 324 are provided for an illustrative purpose only, and the connection module for an audio output module 412, or the like may be further provided. The connection modules 321 to 324 receives switching signals from a mode control unit 330, and the mode control unit 330 receives mode control signals for generating the switching signals from the controller 110 or 220.

Referring to FIG. 1 again, a user interface 400 may be operated in connection with the intermediate unit 300, specifically, communication unit 100 or camera unit 200 through connection modules 321 to 324 (refer to FIG. 2). The user interface 400 is controlled by a unit taking the initiative, between the communication unit 100 and camera unit 200. For example, when information is received to the wireless communication module 120 by the controller 110 of the communication unit 100 while the camera module 220 is being operated by the controller 210 of the camera unit 200, the information is outputted by the user interface 400 not under a control of the controller 110, but under a control of the controller 210.

The user interface 400 includes an output unit 410 for generating an output related to the sense of sight, hearing, touch, or the like, an input unit 420 for inputting information (command, signal) by the manipulation of the user, a microphone 430 for inputting a sound, and the like.

The output unit 410 may include a display unit 411, an audio output module 412, an alarm unit 413, a haptic module 414, and the like.

The display unit 411 may display(output) information processed in the portable electronic device 1000. The display unit 411 may include at least one of a liquid crystal display (LCD), a thin film transistor-LCD (TFT-LCD), and the like. Some of those displays may be configured with a transparent or optical transmission type to view the outside therethrough, which may be called transparent displays. A typical example of the transparent displays may include a transparent LCD (TOLED), and the like. Under this configuration, a user can view an object positioned at a rear side of the electronic device through a region occupied by the display unit 411. In case that the display unit 411 and a touch sensitive sensor (hereinafter, touch sensor) are formed with an interlayer structure (hereinafter, touch screen), the display unit 411 may be used as an input device (user input unit 420) rather than an output device.

The audio output module 412 may output audio data received from the wireless communication module 120 or stored in the memory 140, 240. The audio output module 412 may include a receiver, a speaker, a buzzer, and the like.

The alarm 153 outputs a signal notifying the occurrence of an event in the portable electronic device 1000. The example of the event occurred in the portable electronic device 1000 may include a call signal reception, a message signal reception, a key signal input, a touch input, and the like. The alarm unit 413 may output not only video or audio signals, but also other types of signals, for example, signals notifying the occurrence of an event with vibration, light-emission or the like. Since the video or audio signals can be output through the display unit 411 or audio output module 412, they 411, 412 may be classified as part of the alarm unit 413.

The haptic module 414 generates various tactile effects by which the user can feel. For a representative example of the tactile effects generated by the haptic module 414, there is vibration. Vibration generated by the haptic module 414 may have a controlled intensity, pattern, and the like. For instance, different vibrations may be output in a synthesized manner or in a sequential manner. In addition to the vibration, the haptic module 414 may generate various other tactile effects, such as pin arrangement vertically moving with respect to a skin being contacted, air injection or suction force through an injection or suction hole, touch against a skin surface, contact with an electrode, and the like.

The user input unit 420 allows an input of command (signal, information) for controlling the operation of a portable electronic device. The user input unit 420 may be configured by including a keypad, a dome switch, a touch pad (pressure/capacitance), a jog wheel, a jog switch, and the like.

The microphone 430 receives an external audio signal through the microphone in a phone call mode, a recording mode, a voice recognition mode, and the like, and processes the audio signal into electrical voice data. The processed voice data, in case of the phone call mode, may be converted and outputted into a format that can be transmitted to a mobile communication base station through the mobile communication module 120.

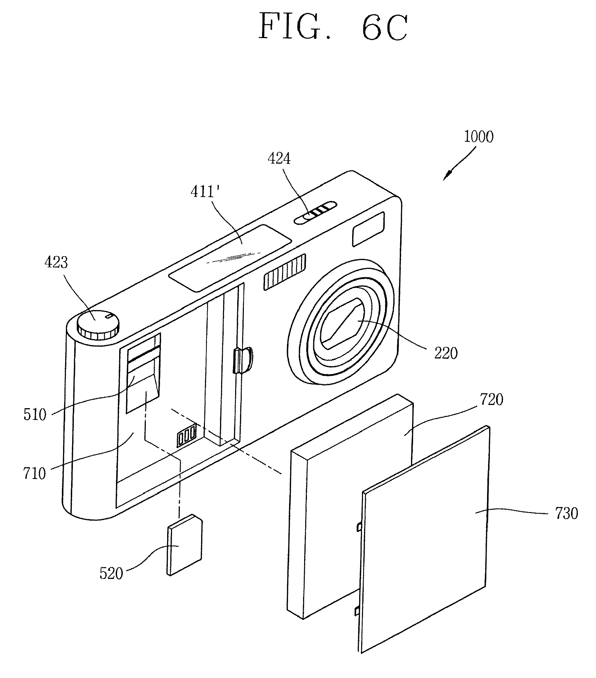

The interface unit 500 performs a role of interfacing with all external devices connected to the portable electronic device 1000. The interface unit 500 receives data or power from external devices and transfers it to each element of the portable electronic device 1000, or transmits data in the portable electronic device 1000 to external devices. The interface unit 500 may include, for example, a wired/wireless headset port, an external charger port, a wired/wireless data port, a memory card port, a port for connecting a device having an identification module, an audio input/output (I/O) port, a video I/O port, an earphone port, and the like. The interface unit 500 may include a memory socket 510 (refer to FIG. 6C) for accommodating a memory card 520.

The identification module is a chip for storing various information required to authenticate an authority to use the portable electronic device 1000, and it may include a user identity module (UIM), a subscriber Identity module (SIM), and the like. Also, a device having the identification module (hereinafter, referred to as 'identification device') may be implemented in the type of a smart card. Hence, the identification device can be connected to the portable electronic device 1000 via a port.

The interface unit 500 may serve as a path for power to be supplied from an external cradle to the portable electronic device 1000 when the portable electronic device 1000 is connected to the external cradle or as a path for transferring various command signals inputted from the cradle by the user to the portable electronic device 1000. Such various command signals or power inputted from the cradle may be signals for recognizing that the portable electronic device 1000 has accurately been mounted on the cradle.

The sensing unit 600 detects a current status of the portable electronic device 1000 such as an open or closed state of the portable electronic device 1000, a location of the portable electronic device 1000, an orientation of the portable electronic device 1000, an acceleration or deceleration of the portable electronic device 1000 and the like, and generates a sensing signal for controlling the operation of the portable electronic device 1000. For example, the sensing unit 600 takes charge of a sensing function associated with whether or not power is supplied from the power supply unit 700, or whether or not an external device is coupled to the interface unit 500.

The power supply unit 700 receives external power or internal power by a control of the intermediate unit 300 to supply power required for the operation of each constituent element. As described above, the power supply unit 700 is not separately provided therefrom, and the function thereof may be integrated into the power unit 130.

The user interface 400, the interface unit 500, and the sensing unit 600 are connected to either one of the communication unit 100 and the camera unit 200 through the intermediate unit 300 to be controlled thereby.

For example, when the display unit 411 outputs a screen to be captured in conjunction with a controller 210 of the camera unit 200, a controller 110 of the communication unit 100 notifies that there exists the content to be outputted through the display unit 411 via the intermediate unit 300. The controller received the notification controls the display unit 411 to output the content.

Other than memories 140, 240 which are independently used by the communication unit 100 and the camera unit 200 respectively, a memory card 520 (refer to FIG. 6C) mounted on the memory socket 510 is configured to be accessed by both of them. For example, image information stored in the memory card 520 by the controller 210 may be transmitted to the outside by the controller 110.

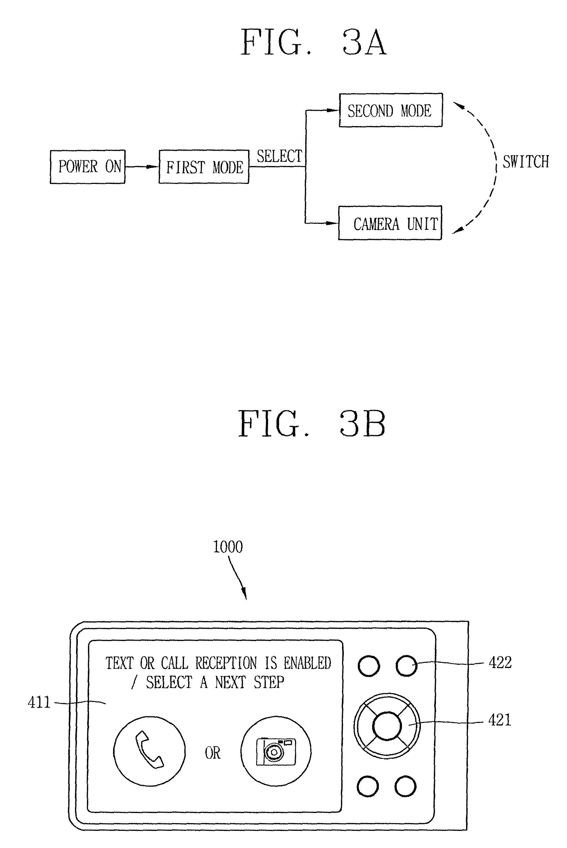

FIG. 3A is a block diagram for explaining the operation of a portable electronic device 1000 having a communication unit 100 and a camera unit 200 in FIG. 1.

Referring to the drawing, when the user manipulates a user input unit 420 to activate the portable electronic device 1000, the power supply unit 700 or power unit 130 activates a controller 110 of the communication unit 100. The controller 110 allows the wireless communication module 120 to be operated in a first mode capable receiving an event (call signal, broadcast signal, text message, etc.).

In the first mode, it is determined or selected whether or not the portable electronic device 1000 will be advanced into the second mode or will be advanced into a state that the camera unit 200 is activated.

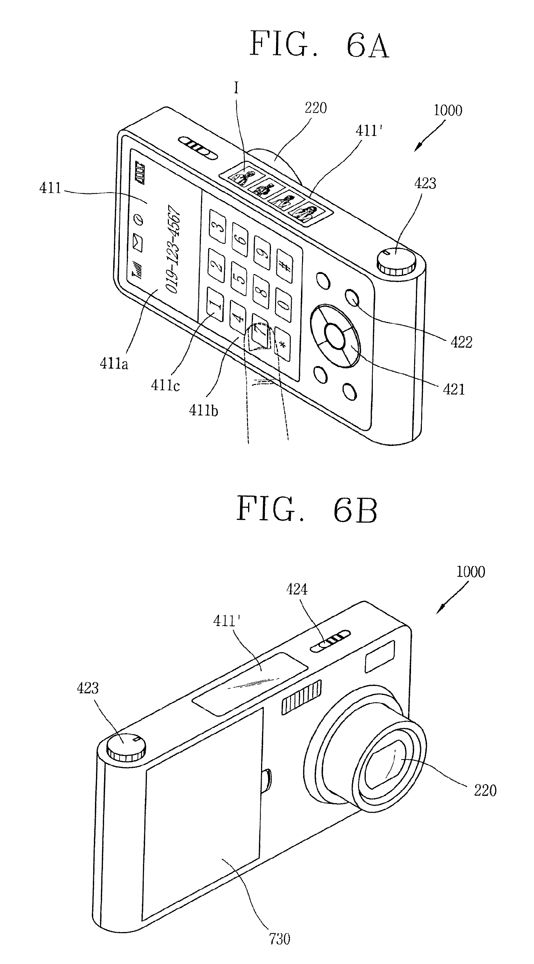

In the second mode, it is possible to receive an event, as well as to perform a reply or reading to the received event (for example, talking over the phone in response to a call signal, broadcast output in response to a broadcast signal, reading for text message content, etc.). Moreover, in the second mode, it is possible to transmit an event (for example, phone call, text message transmission, etc.). In case of making a phone call, the display unit 411 provides a screen for transmitting a call number as illustrated in FIG. 6A. Also, in the second mode, functions which are typically implemented in a portable electronic device may be additionally implemented, such as schedule management, screen setting, bell sound setting, and the like, for example.

The camera unit 200 may be switched to be activated while executing the second mode, and vice versa. Such switching may be implemented by the user's selection through the user input unit 420 or by the setting for implementing the switching associated with the event reception. Even if the camera unit 200 is activated, the first mode maintains an activated state.

FIG. 3B is a conceptual view illustrating an output screen of a display unit 411 for explaining a selection step of FIG. 3A.

Referring to the drawing, while notifying the user that the first mode is implemented, the portable electronic device 1000 may ask whether or not it will be advanced to the second mode or will be advanced to the activation of the camera unit 200 as a next step. The user will select either one of the two options using a method of touching the relevant icon, or the like.

Otherwise, the selection may be implemented by previously inputted setting in the portable electronic device 1000 without additional manipulation. Moreover, if the user input unit 420 assigned to activate the power supply unit 700 is manipulated once again or manipulated continuously for a predetermined time of period, then the determination step may be confirmed as an activation of the second mode. Otherwise, an exclusive key which is set to implement the selection of activating the camera unit 200 while turning on the power of the portable electronic device 1000 may be assigned as one of the user input unit 420.

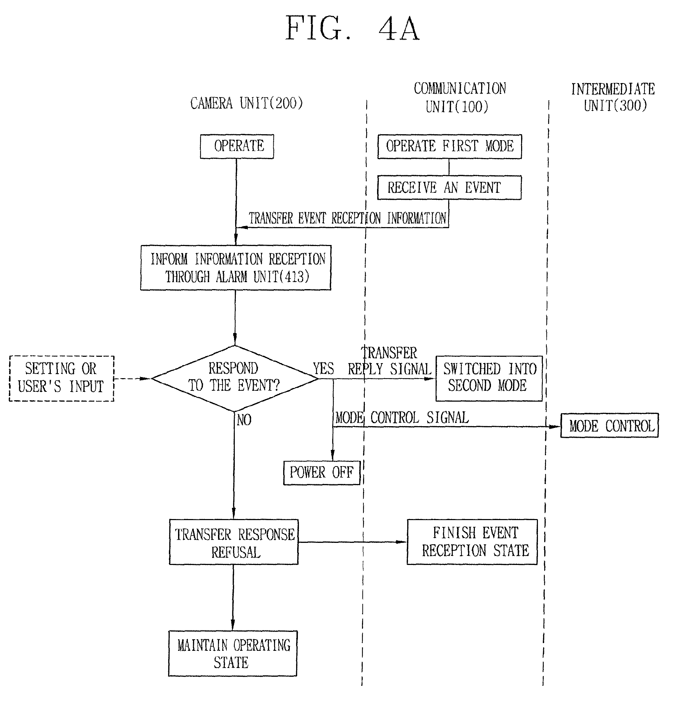

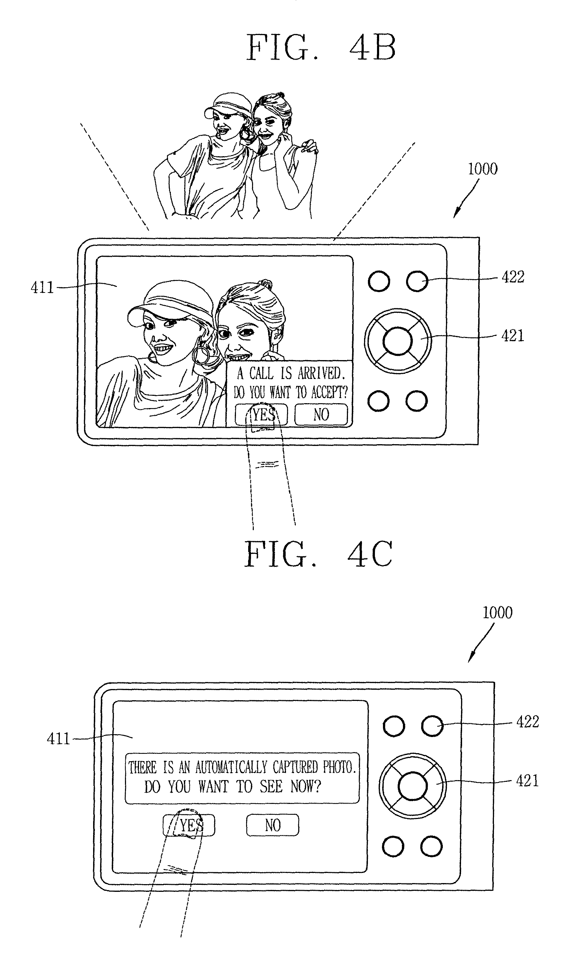

FIG. 4A is an operation flowchart for explaining a mode switching from the camera unit 200 to the communication unit 100 in FIG. 3A, and FIG. 4B is a conceptual view illustrating an example of an alarm step of FIG. 4A, and FIG. 4C is a conceptual view illustrating a state subsequent to finishing a second mode of the communication unit 100 in FIG. 4A.

Referring to FIG. 4A, the communication unit 100 is operated in a first mode in a state that the camera unit 200 is activated. In case that a wireless communication module 120 of the communication unit 100 receives an event, a controller 110 of the communication unit 100 transfers information that the event has been received to a controller 210 of the camera unit 200. The controller 210 received the event reception information notifies the user to recognize this through the alarm unit 413.

In this embodiment, as illustrated in FIG. 4B, reception information is notified through the display unit 411 as a form of the above alarm. The above situation may be outputted in a state of being overlapped with respect to an image obtained from the camera module 220 or the above situation may be outputted by dividing the screen. When dividing the screen, the image may be outputted in a state of being adjusted to a divided region thereof while being reduced in the size. Moreover, image information provided as a background may be displayed dimly compared to reception information in order to emphasize the reception information.

On the display unit 411, it may be outputted the content for asking whether or not it will be changed from a state of activating the camera unit 200 to a state of receiving a call (second mode) or an icon for selecting the state.

Alternatively, the reception of an event may be notified to the user through vibration or light-emission. For the light-emission, a light-emitting unit associated with an light-emitting element such as LED, and the like may be formed on a surface provided with a manipulation unit 423 of the portable electronic device 1000.

Referring to FIG. 4A again, the controller 210 determines whether or not there is a response to the event (whether or not the communication unit 100 is allowed to be operated in the second mode). The determination may be implemented by a previous setting, but may be also implemented by the user's selection through the user input unit 420 as illustrated in FIG. 4B.

If determined it is switched into the second mode, then the controller 210 transfers a signal for being operated in the second mode to the controller 110 through the intermediate unit 300. With the above signal, the communication unit 100 that has been operated in the first mode is operated in the second mode, and thereby a response to the received event will be implemented. The controller 210 sends a mode control signal for connecting the display unit 411, the audio output module 412, or the like, with the controller 110 to the intermediate unit 300, specifically mode control unit 300 (refer to FIG. 2). Subsequent to the above operation, the controller 210 instructs the power unit 230 to turn off the camera unit 200.

If determined that it is not switched into the second mode, then the controller 210 notifies the controller 110 of this. As a result, the controller 110 finishes a state that the wireless communication module 120 receives the event. The communication unit 100 is not switched into the second mode, and the camera unit 200 thereby maintains the existing operating state as it is.

Referring to FIG. 4C, when the camera unit 200 is deactivated due to the reception of an event, or the like while being activated, it may be configured to store information for the operation during a predetermined section prior to and subsequent to the timing of deactivation.

For example, in case of switching into a state of activating the second mode of the communication unit 100 due to incoming call while capturing an image by the camera module 220, the camera module 220 may be configured to capture and store an image prior to the switching operation at its discretion. At the alarm of receiving a call, the capture and storage operation may be implemented. Using this function, it has an advantage that the user can make up for missing a crucial moment due to an abrupt interruption.

In case that the state of incoming call is finished and the camera unit 200 is activated again, the automatically captured and stored image will be shown to the user. As illustrated in the drawing, the above fact will be displayed on the display unit 411 and it may be configured to ask whether or not the stored image will be shown to the user. In response to this, the user can select it by touching the display unit 411 or through other manipulation units 421 to 423. Otherwise, the above selection may be implemented by the setting of the portable electronic device 1000.

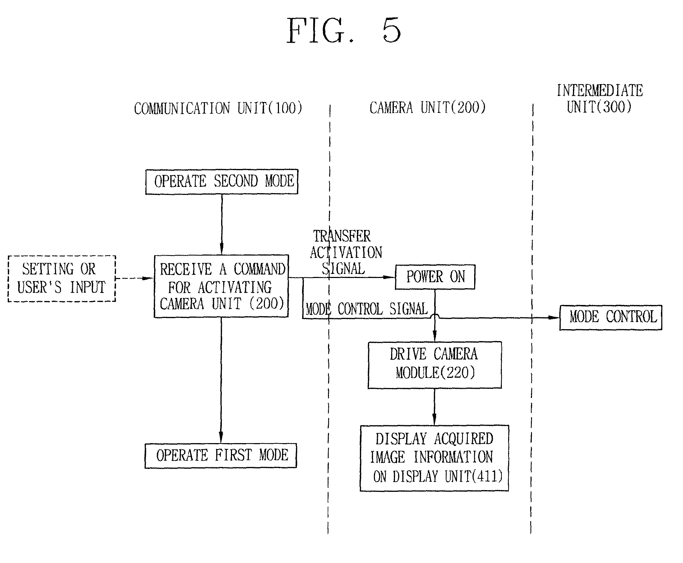

FIG. 5 is an operation flowchart for explaining a mode switching from a communication unit 100 to a camera unit 200 in FIG. 3A.

Referring to the drawing, a command for activating the camera unit 200 by the setting thereof or manipulation of the user input unit 420 is received to the controller 110 while the communication unit 100 is being operated in the second mode.

The controller 110 transfers the above command to the power unit 230 of the camera unit 200. The power unit 230 supplies power to the camera unit 200, thereby allowing the controller 210 to drive the camera module 220.

The controller 110 transfers a mode control signal to the intermediate unit 300, thereby the intermediate unit 300 allowing the display unit 411, the user input unit 420, and the like to be controlled by the controller 210 of the camera unit 200. By this, image information acquired by the camera module 220 may be displayed on the display unit 411. A command for controlling the drive of the camera module 220 may be inputted through the manipulation of the user input unit 420.

The controller 110 that has activated the camera unit 200, allows the communication unit 100 to finish the second mode and be operated in the first mode.

FIGS. 6A through 6D are perspective views for explaining a portable electronic device 1000 according to an embodiment of the present invention.

Referring to FIGS. 6A and 6B, the display unit 411 and the user input units 420/421 to 424 are sequentially arranged on a surface of the portable electronic device 1000. The user input unit 420 may include a ring-shaped key 421, a separately operating key 422, a rotation-type key 423, and the like. The rotation-type key 423 may be used for the above-mentioned switching between the activations of the second mode and camera unit 200. Alternatively, a sliding-type key 424 may be also provided to slide-move between the first location and the second location, and the above switching may be implemented by the manipulation of the key 424.

The camera module 220 and a battery cover 730 are sequentially arranged on a surface opposite to the above surface. The camera module 220 may be arranged at a position corresponding to the display unit 411. The camera module 220 may be driven to change the length of the portable electronic device 1000 in a thickness direction thereof to perform a zoom function.

Various kinds of visual information may be displayed on the display unit 411. The visual information may be displayed in a form of characters, numerals, symbols, graphics, or icons. For an input of the visual information, at least one of the characters, numerals, symbols, graphics, or icons may be displayed with a predetermined arrangement so as to be implemented in a form of keypad. Such a keypad may be referred to as a so-called "soft key."

The display unit 411 may be operated with an entire region, or operated by dividing into a plurality of regions. In case of the latter, the plurality of regions may be configured to be operated in association with one another. For example, an output window 411 a and an input window 411 b are displayed in the upper and lower of the display unit 411 respectively. The output window 411 a and the input window 411 b are regions assigned for the output or input of information respectively. A soft key 411c displayed with numerals for inputting a phone number, or the like is displayed on the input window 411b. When touching the soft key 411c, numerals corresponding to the touched soft key are displayed on the output window 411 a. When manipulating the manipulation unit 421, it may be configured to attempt a call connection to the phone number displayed on the output window 411 a. Here, numerals outputted on the output window 411 a to configure the phone number may be referred to as a kind of entity while the soft key 411c c may be referred to as another kind of entity. Information related to the operation of the communication unit 100 such as radio signal reception status, current time, message reception status, and the like, may be additionally displayed on a corner of the display unit 411.

An additional display unit 411' may exist in addition to the display unit 411 based on the implementation type of the portable electronic device 1000. For example, in case that the display unit 411' is disposed on a surface provided with the manipulation unit 423, the above display unit 411' may display another information different from the information displayed on the display unit 411. For example, in case that a phone number is displayed on the display unit 411, the display unit 411' may provide a screen to view an image (I) that has been captured through the camera unit 200.

When an image (I) is touched on a screen provided through the display unit 411', the camera unit 200 of the portable electronic device 1000 may be switched into an activated state while the relevant image is being displayed through the display unit 411. According to this, there is an advantage that the camera unit 200 can be switched into an activated state by an intuitive operation of touching the viewing image (I) without manipulating a separate key 423.

Referring to FIG. 6C, a region formed to be recessed and covered by a battery cover 730 constitutes an accommodation chamber 710 for accommodating a battery 720. A memory socket 510 for accommodating an external memory 520 may be disposed at the accommodation chamber 710.

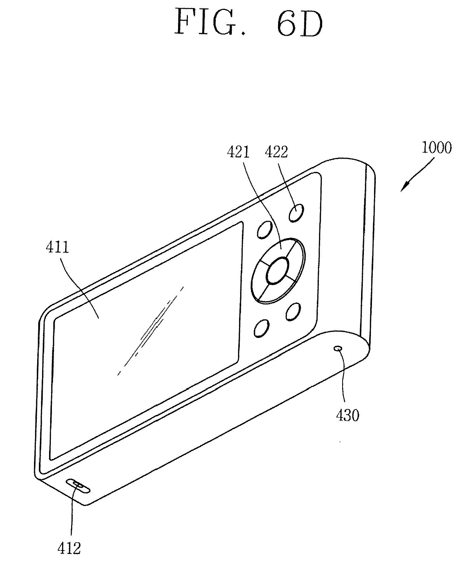

Alternatively, the battery cover 730 may not be disposed at a main surface of the portable electronic device 1000 disposed with the camera module 220, but may be disposed to be coupled to a lateral surface which is coupled with the microphone 430 (refer to FIG. 6D). In this case, the battery cover 730 may have a rectangular shape to fit into a lateral surface of the battery 720. Moreover, the memory socket 510 may be accommodated into a separate space from the battery 720.

Otherwise, the battery 720 is provided in a main body of the portable electronic device 1000 in a built-in type, and it may be configured not be pulled out without disintegrating the main body. In this case, a socket connected to the battery 720 is exposed from the main body, and it may be configured to charge the battery 720 using a charger connected to the socket.

Referring to FIG. 6D, an audio output module 412 and a microphone 430 may be disposed at a surface opposite to the surface provided with the manipulation unit 423 of the portable electronic device 1000. In case of talking over the phone using the portable electronic device 1000, the surface disposed with the microphone 430 or the like is brought into contact with the user's cheek, and the surface provided with the display unit 411 is directed to the outside.

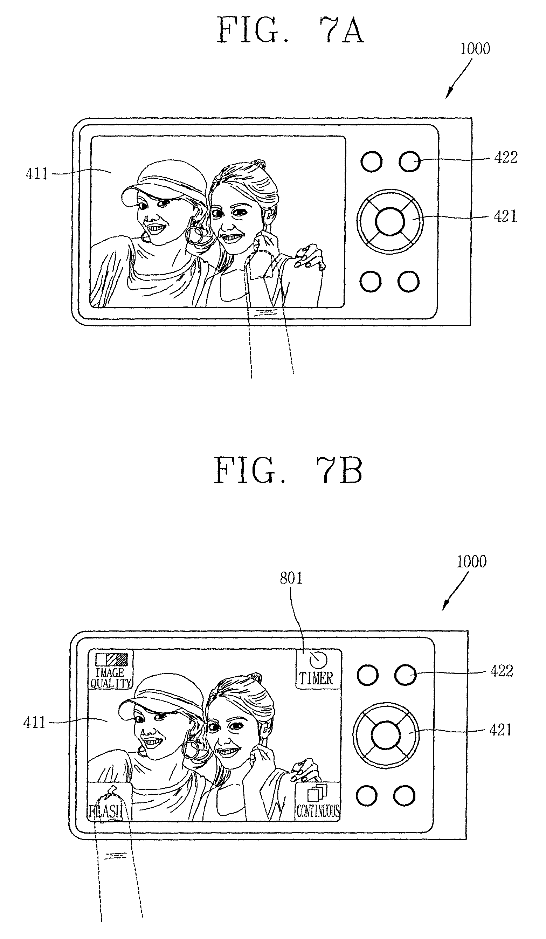

FIGS. 7A and 7B are conceptual views illustrating for explaining the operation of a display unit 411 according to an embodiment of the present invention.

Referring to FIG. 7A, when activating the camera unit 200, image information acquired through the camera module 220 is displayed on the display unit 411. The input for controlling the operation of the camera module 220 may be implemented through manipulation units 421 to 424. However, separately from the manipulation units 421 to 424 or in place of them, a menu related to image capture may be displayed when touching to the display unit 411.

Referring to FIG. 7B, a menu 801 displayed by touching to the display unit 411 may be displayed at a corner portion of the display unit 411. This allows an image for capture to be displayed at a center of the display unit 411 with no great interruption.

The above menus 801 may be displayed to be overlapped with an image for capture or displayed by dividing the screen. The menu 801 is implemented by the user's touch with respect to the menu.

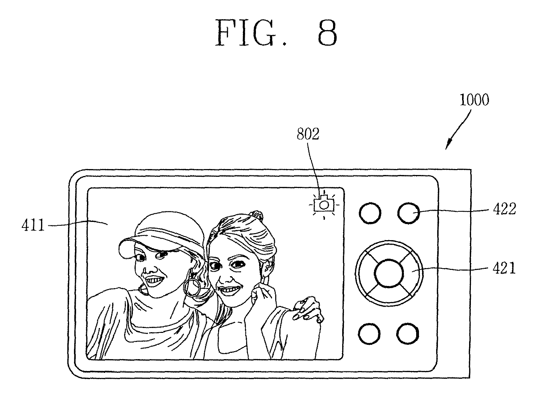

FIG. 8 is a conceptual view for explaining an operating state of a portable electronic device 1000 associated with a camera unit 200.

Referring to the drawing, image information for capture is displayed on the display unit 411. An icon 802 for displaying a camera may be also displayed on the display unit 411.

The icon 802 for displaying a camera displays a state that the portable electronic device 1000 is operated in a state of being exclusively used for camera capture. Alternatively, the above state may be displayed in a method of emitting the foregoing light-emitting element, and the like. Such an exclusive capture state will be determined to be set to lockout or the like in an activated state of the camera unit 200 by the user's selection or setting.

Even in the above lockout state, information for the event received by the communication unit 100 will not be notified to the controller 210 of the camera unit 200, or even when notified to the controller 210, it will not be informed to the user through the alarm unit 413. Through this, there is provided an environment that the user can be absorbed only in image capture without being interrupted by a call, text reception, or the like.

The communication unit 100 may be configured to give a reply for informing that it is in a situation unable to store the received information and/or respond to the other party from the user. Nevertheless, in case of receiving a call again or the like, it will be displayed on the camera unit 200 that the call has been received in consideration of the urgency of the call. Based on the user's setting, the above exclusive capture state may be released not by calling twice but calling three or more times.

Other than the foregoing method of not alarming the reception of an event, the controller 210 may provide the above alarm only using a specific method of minimizing the interruption of photo capture. For example, light may be outputted through a light-emitting means or the alarm may be visually outputted, not on the display unit 411 but on another display unit 411' only (refer to FIG. 6A).

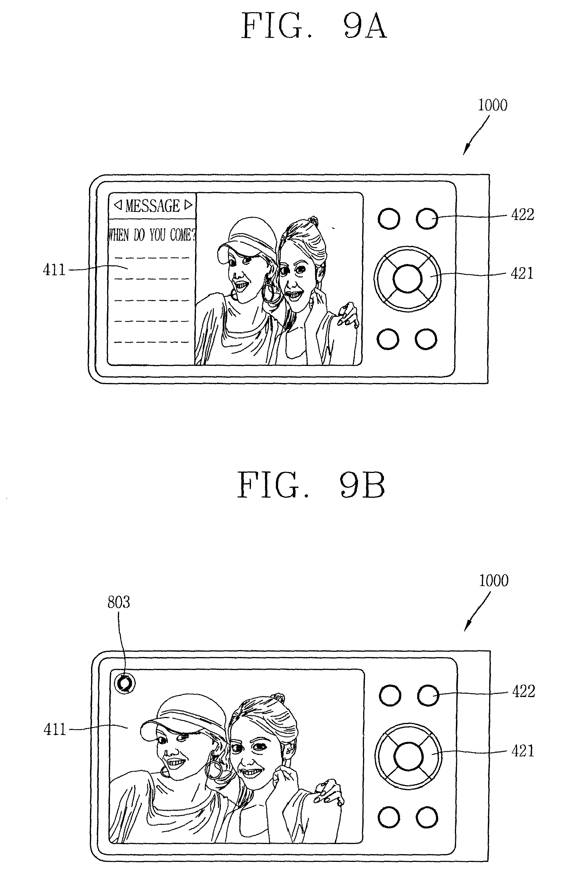

FIGS. 9A and 9B are conceptual views for explaining a method of displaying information associated with a first mode of the communication unit 100 and the camera unit 200 on the display unit 411.

Referring to FIG. 9A, when a text message is received while capturing an image through the camera unit 200, the content of text message and the image for capture may be displayed on the divided regions respectively within the display unit 411.

Alternatively, as illustrated in FIG. 9B, while displaying the image for capture on an entire display unit 411, a switch icon 803 to be touched may be displayed together therewith in order to view the content of text message.

If the switch icon 803 is touched by the user, then the display unit 411 is switched to display the content of text. If the switch icon 803 is touched once more, the display unit 411 returns to a state of displaying the image to be captured. Otherwise, the user may perform the foregoing switching operation by manipulating manipulation units 421 to 424, subsequent to recognizing the reception of a text message due to the light-emission of a light-emitting element.

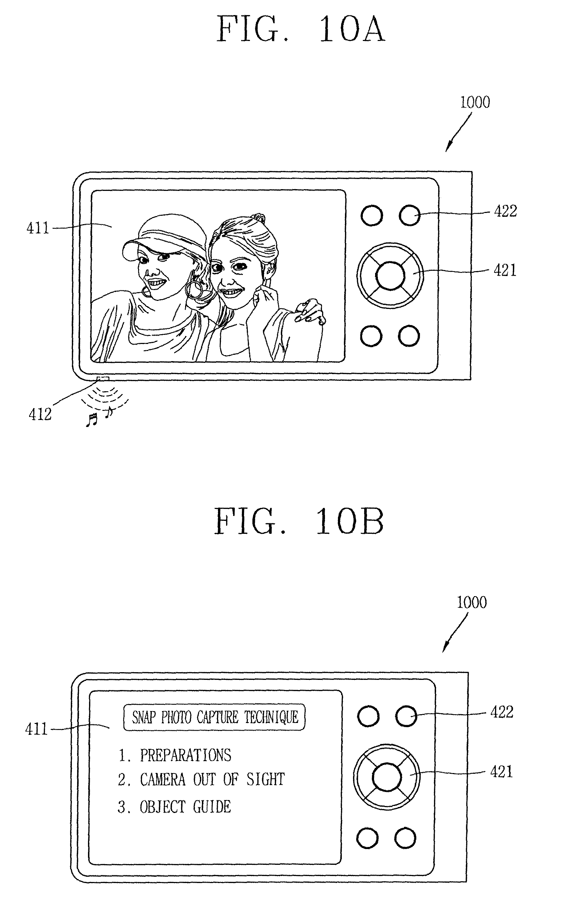

FIGS. 10A and 10B are conceptual views illustrating an operating state of a portable electronic device 1000 associated with the activation of a camera unit 200.

Referring to FIG. 10A, in a state that the camera unit 200 is activated to display an image to be captured on the display unit 411, music information received through the communication unit 100 is auditorily outputted through the audio output module 412 other than the display unit 411. Through this, photo capture may be concurrently performed while listening to music through a server or base station.

In this case, the controller 210 of the camera unit 200 controls the camera module 220 and the display unit 411, and the controller 110 of the communication unit 100 controls the wireless communication module 120 and the audio output module 412 respectively. In other words, the right to control the user interface 400 is not all granted to the controller 210, and the controller 110 may be configured to have the right to control part of the user interface 400.

Referring to FIG. 10B, the user can improve his or her photo capture technique according to a training program. In a state that the training program is accessed in real-time by the user through the communication unit 100, training information provided by the training program will be displayed on the display unit 411. Of course, training information may be also outputted together through the audio output module 412.

The user will attempt to take an image capture at the time of practical training subsequent to recognizing the outputted training information. At the time of such practical training, the display unit 411 will not display training information but an image to be captured.

In this case, subsequent to controlling the display unit 411 by the controller 110 of the communication unit 100, the right to control the display unit 411 is handed over to the controller 210 of the camera unit 200, and it will thereby be in the above-mentioned state. In case that the training screen is required again, the right to control the display unit 411 may be transferred to the controller 110.

Other than a case that a screen switch is implemented at the timing that has been set in the training program, the switch timing may be determined at the user's discretion through the screen switch icon 803 as described with reference to FIG. 9B.

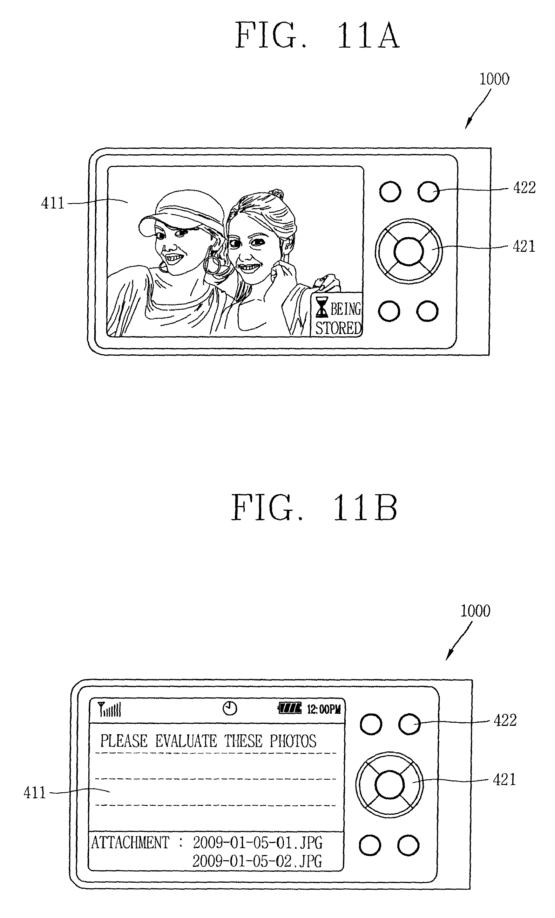

FIGS. 11A and 11B are conceptual views for explaining the transmission of an image captured by a camera unit 200.

Referring to FIG. 11A, an image acquired while operating the camera unit 200 is stored in the memory 240 of the camera unit 200. In case that the use of the camera unit 200 is suspended and switched into the second mode of the communication unit 100 by the user, the controller 210 also stores all the stored photos in a memory card 520 or transfers them to the memory card 520. Otherwise, as the stored images are sequentially displayed on the display unit 411, it may be also configured that the user selects whether or not each of them will be stored in the memory card 520.

Referring to FIG. 11B, images classified by the user's selection or setting are appended to an email according to a switching into the second mode, and it will be in a transmittable state.

The user may write a required message and transmit it together with the appended images to another person. Alternatively, the user may manipulate the input unit 420 to cancel the above transmittable state.

According to an embodiment of the present invention, the foregoing method can be implemented as codes that can be read by a processor in a medium recorded with a program. For examples of the medium that can be read by a processor, there are ROM, RAM, CD-ROM, magnetic tape, floppy disk, optical data storage device, and the like, and it may be also implemented in a form of carrier wave (for example, transmission through the Internet).

According to a portable electronic device associated with at least one embodiment of the present invention, in a state that the first mode of the communication unit (communication block) is activated only, the electronic device is configured to activate a camera unit (image capture block) without activating the second mode thereof, and it can be thereby operated according to the user's intention if the user wants to immediately implement the camera unit. In the above case, moreover, the second mode which is not selected by the user will not be unnecessarily implemented. The communication block and the image capture block have individual power supply units respectively and they are configured to communicate through an intermediate unit, thereby allowing the two blocks to independently perform the function in charge while cooperating with each other on even ground.

The portable electronic device that has been described above is not limited to the configurations and methods of the foregoing embodiments, but all or part of each embodiment may be selectively combined with each other so as to implement various modifications of the embodiments.

## Claims

1. A portable electronic device comprising:
a main body including a user input unit (420);
a display unit (411) located at a surface of the main body;
a camera unit (200) having a camera module (220) exposed through a surface of the main body; and
a communication unit (100) provided in the main body, the communication unit (100) being configured to perform a wireless communication function, the communication unit (100) being selectively operable in one of a first mode and a second mode,
wherein, in the first mode, the communication unit (100) is configured to receive only reception information related to performing the wireless communication function and the display unit (411) is configured to display image information acquired by activating the camera module (220), and
wherein, in the second mode, the communication unit (100) is configured to display transmission information related to performing the wireless communication function and the camera module (220) is deactivated.

2. The portable electronic device of claim 1, wherein, prior to activating the camera module (220) while the communication unit (100) is operated in the first mode, the display unit (411) is configured to display a screen for the selection of either operating the communication unit (100) in the second mode or activating the camera unit (200).

3. The portable electronic device of claim 2, wherein the selection for activating the camera unit (200) is inputted by manipulating the user input unit (420).

4. The portable electronic device of any one of claims 1 to 3, wherein the display unit (411) is configured to receive a touch input, and the user input unit (420) comprises the display unit (411).

5. The portable electronic device of any one of claims 1 to 4, further comprising:
a memory socket (510) provided in the main body and configured to accommodate an external memory (520) accessible by the camera unit (200) and the communication unit (100).

6. The portable electronic device of any one of claims 1 to 5, further comprising:
an alarm unit (413) configured to selectively provide an alarm related to the reception information received by the communication unit (100) while being operated in the first mode while the display unit (411) displays the image information.

7. The portable electronic device of claim 6, wherein the alarm unit (413) comprises the display unit (411), and the display unit (411) displays information for the alarm along with the image information.

8. The portable electronic device of claim 7, wherein the alarm unit (413) is configured to cause the image information to be displayed by the display unit (411) in a changed state when the reception information is received by the communication unit (100).

9. The portable electronic device of any of claims 6 to 8, wherein, when the camera unit (200) is in an activated state, the camera unit (200) is configured to selectively provide a lockout function that prevents the alarm unit (413) from providing an alarm or provides an alarm only when a predetermined sequence of events occurs.

10. The portable electronic device of claim 9, wherein the predetermined sequence of events includes receiving call information repeatedly from a single source.

11. The portable electronic device of any one of claims 1 to 10, wherein the first mode of the communication unit maintains an activated state while the camera unit (200) is activated.

12. The portable electronic device of any one of claims 1 to 11, wherein the camera unit (200) is configured to be deactivateable by an input through the user input unit (420) while the camera unit (200) is activated to switch the communication unit (100) from the first mode to the second mode.

13. The portable electronic device of any one of claims 1 to 12, wherein the display unit (411) displays an entity related to the transmission information or displays another entity for inputting the entity related to the transmission information when the communication unit (100) is operated in the second mode.

14. The portable electronic device of any one of claims 1 to 13, wherein the display unit (411) displays a menu for controlling the operation of the camera module when the camera unit (200) is activated.
